# EUROPEAN PATENT SPECIFICATION

(11) **EP 2 982 064 B1**
(45) Date of publication and mention of the grant of the patent: **27.03.2019**
(21) Application number: 14724910.6
(22) Date of filing: 07.04.2014
(51) Int. Cl.: H04J 11/00

(54) **COMMON REFERENCE SIGNAL INTERFERENCE CANCELLATION TRIGGERING IN HOMOGENEOUS NETWORKS**
AUSLÖSUNG EINER INTERFERENZUNTERDRÜCKUNG IN ALLGEMEINEN REFERENZSIGNALEN IN HOMOGENEN NETZWERKEN
DÉCLENCHEMENT D'ANNULATION DE BROUILLAGE DE SIGNAL DE RÉFÉRENCE COMMUN DANS DES RÉSEAUX HOMOGÈNES

(30) Priority: 05.04.2013 US 201361809278 P; 04.04.2014 US 201414245949
(43) Date of publication of application: 10.02.2016
(73) Proprietor: Qualcomm Incorporated, San Diego, CA 92121-1714 (US)
(72) Inventor: VAJAPEYAM, Madhavan Srinivasan, San Diego, California 92121-1714 (US); JI, Tingfang, San Diego, California 92121-1714 (US); YOO, Taesang, San Diego, California 92121-1714 (US); LUO, Tao, San Diego, California 92121-1714 (US); DAMNJANOVIC, Aleksandar, San Diego, California 92121-1714 (US); WEI, Yongbin, San Diego, California 92121-1714 (US)
(74) Representative: Dunlop, Hugh Christopher
(86) International application number: PCT/US2014/033203
(87) International publication number: WO 2014/165852

(56) References cited:
- EP-A1- 2 536 053
- WO-A1-2012/018611
- US-A1- 2011 261 673
- US-A1- 2014 233 457

## Description

### BACKGROUND

### Field

The present disclosure relates generally to communication systems, and more particularly, to systems and methods for controlling interference cancellation in homogeneous networks.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE is a set of enhancements to the Universal Mobile Telecommunications System (UMTS) mobile standard promulgated by Third Generation Partnership Project (3GPP). It is designed to better support mobile broadband Internet access by improving spectral efficiency, lowering costs, improving services, making use of new spectrum, and better integrating with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.
WO2012/018611 describes a method of wireless communication that includes receiving physical layer signaling from a serving eNodeB in a wireless network, where interference estimation, interference cancellation and/or spatial equalization of user equipment is controlled in accordance with the received signaling.

### SUMMARY

According to the invention a method according to claim 1 and an apparatus according to claim 14 are provided.

### BRIEF DESCRIPTION OF THE DRAWINGS

FIG. 1 is a diagram illustrating an example of a network architecture.
FIG. 2 is a diagram illustrating an example of an access network.
FIG. 3 is a diagram illustrating an example of a DL frame structure in LTE.
FIG. 4 is a diagram illustrating an example of an UL frame structure in LTE.
FIG. 5 is a diagram illustrating an example of a radio protocol architecture for the user and control planes.
FIG. 6 is a diagram illustrating an example of an evolved Node B and user equipment in an access network.
FIG. 7 is a diagram illustrating a range expanded cellular region in a heterogeneous network.
FIG. 8 is a diagram illustrating a homogeneous network.
FIG. 9 is a flow chart of a method of common reference signal interference cancellation (CRS-IC) triggering.
FIG. 10 is a conceptual data flow diagram illustrating the data flow between different modules/means/components in an exemplary apparatus.
FIG. 11 is a diagram illustrating an example of a hardware implementation for an apparatus employing a processing system.
FIG. 12 is a flow chart of a method of CRS-IC triggering.
FIG. 13 is a conceptual data flow diagram illustrating the data flow between different modules/means/components in an exemplary apparatus.
FIG. 14 is a diagram illustrating an example of a hardware implementation for an apparatus employing a processing system.
FIG. 15 is a flow chart of a method of CRS-IC triggering.
FIG. 16 is a conceptual data flow diagram illustrating the data flow between different modules/means/components in an exemplary apparatus.
FIG. 17 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

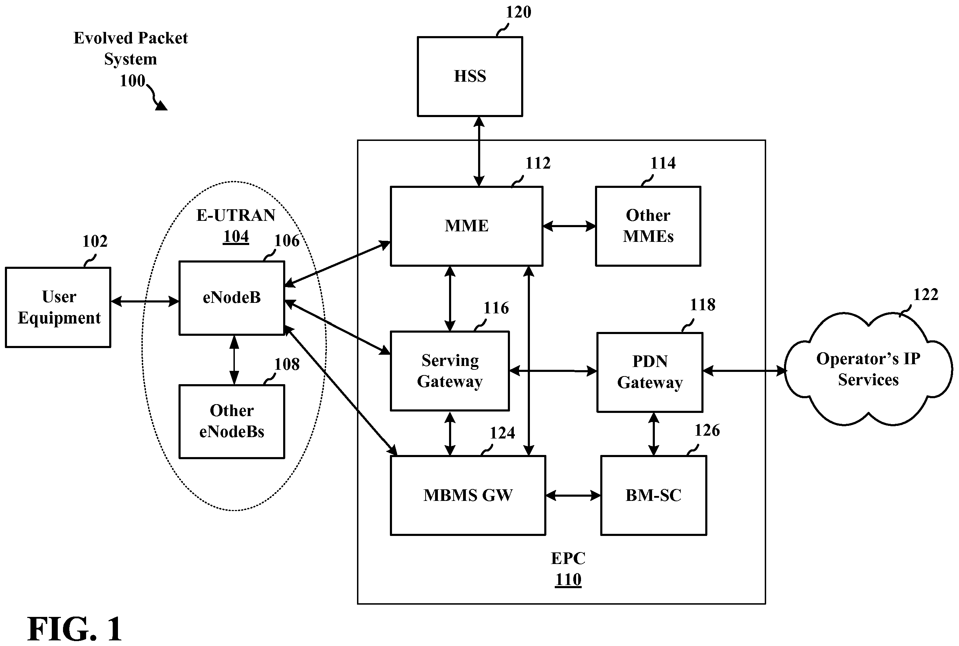

FIG. 1 is a diagram illustrating an LTE network architecture 100. The LTE network architecture 100 may be referred to as an Evolved Packet System (EPS) 100. The EPS 100 may include one or more user equipment (UE) 102, an Evolved UMTS Terrestrial Radio Access Network (E-UTRAN) 104, an Evolved Packet Core (EPC) 110, a Home Subscriber Server (HSS) 120, and an Operator's Internet Protocol (IP) Services 122. The EPS can interconnect with other access networks, but for simplicity those entities/interfaces are not shown. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 106 and other eNBs 108. The eNB 106 provides user and control planes protocol terminations toward the UE 102. The eNB 106 may be connected to the other eNBs 108 via a backhaul (e.g., an X2 interface). The eNB 106 may also be referred to as a base station, a Node B, an access point, a base transceiver station, a radio base station, a radio transceiver, a transceiver function, a basic service set (BSS), an extended service set (ESS), or some other suitable terminology. The eNB 106 provides an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, or any other similar functioning device. The UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 106 is connected to the EPC 110. The EPC 110 includes a Mobility Management Entity (MME) 112, other MMEs 114, a Serving Gateway 116, a Multimedia Broadcast Multicast Service (MBMS) Gateway 124, a Broadcast Multicast Service Center (BM-SC) 126, and a Packet Data Network (PDN) Gateway 118. The MME 112 is the control node that processes the signaling between the UE 102 and the EPC 110. Generally, the MME 112 provides bearer and connection management. All user IP packets are transferred through the Serving Gateway 116, which itself is connected to the PDN Gateway 118. The PDN Gateway 118 provides UE IP address allocation as well as other functions. The PDN Gateway 118 is connected to the Operator's IP Services 122. The Operator's IP Services 122 may include the Internet, an intranet, an IP Multimedia Subsystem (IMS), and a PS Streaming Service (PSS). The BM-SC 126 may provide functions for MBMS user service provisioning and delivery. The BM-SC 126 may serve as an entry point for content provider MBMS transmission, may be used to authorize and initiate MBMS Bearer Services within a PLMN, and may be used to schedule and deliver MBMS transmissions. The MBMS Gateway 124 may be used to distribute MBMS traffic to the eNBs (e.g., 106, 108) belonging to a Multicast Broadcast Single Frequency Network (MBSFN) area broadcasting a particular service, and may be responsible for session management (start/stop) and for collecting eMBMS related charging information.

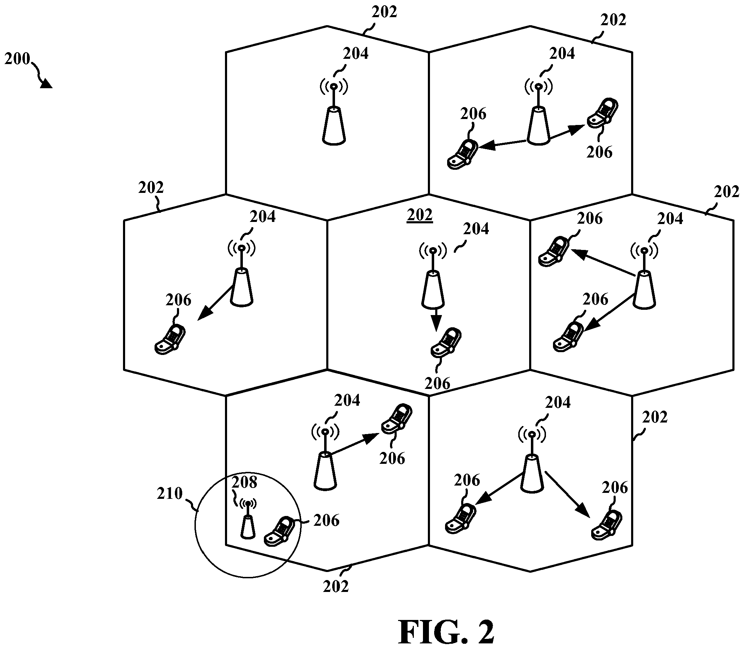

FIG. 2 is a diagram illustrating an example of an access network 200 in an LTE network architecture. In this example, the access network 200 is divided into a number of cellular regions (cells) 202. One or more lower power class eNBs 208 may have cellular regions 210 that overlap with one or more of the cells 202. The lower power class eNB 208 may be a femto cell (e.g., home eNB (HeNB)), pico cell, micro cell, or remote radio head (RRH). The macro eNBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNBs 204 are responsible for all radio related functions including radio bearer control, admission control, mobility control, scheduling, security, and connectivity to the serving gateway 116. An eNB may support one or multiple (e.g., three) cells (also referred to as a sector). The term "cell" can refer to the smallest coverage area of an eNB and/or an eNB subsystem serving are particular coverage area. Further, the terms "eNB," "base station," and "cell" may be used interchangeably herein.

The modulation and multiple access scheme employed by the access network 200 may vary depending on the particular telecommunications standard being deployed. In LTE applications, OFDM is used on the DL and SC-FDMA is used on the UL to support both frequency division duplex (FDD) and time division duplex (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data streams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNB 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

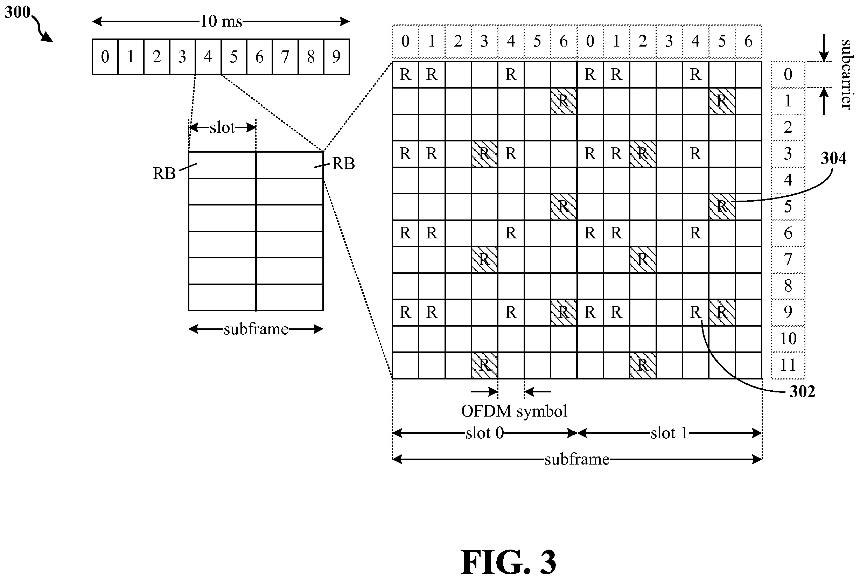

FIG. 3 is a diagram 300 illustrating an example of a DL frame structure in LTE. A frame (10 ms) may be divided into 10 equally sized subframes. Each subframe may include two consecutive time slots. A resource grid may be used to represent two time slots, each time slot including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, or 84 resource elements. For an extended cyclic prefix, a resource block contains 6 consecutive OFDM symbols in the time domain and has 72 resource elements. Some of the resource elements, indicated as R 302, 304, include DL reference signals (DL-RS). The DL-RS include Cell-specific RS (CRS) (also sometimes called common RS) 302 and UE-specific RS (UE-RS) 304. UE-RS 304 are transmitted only on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

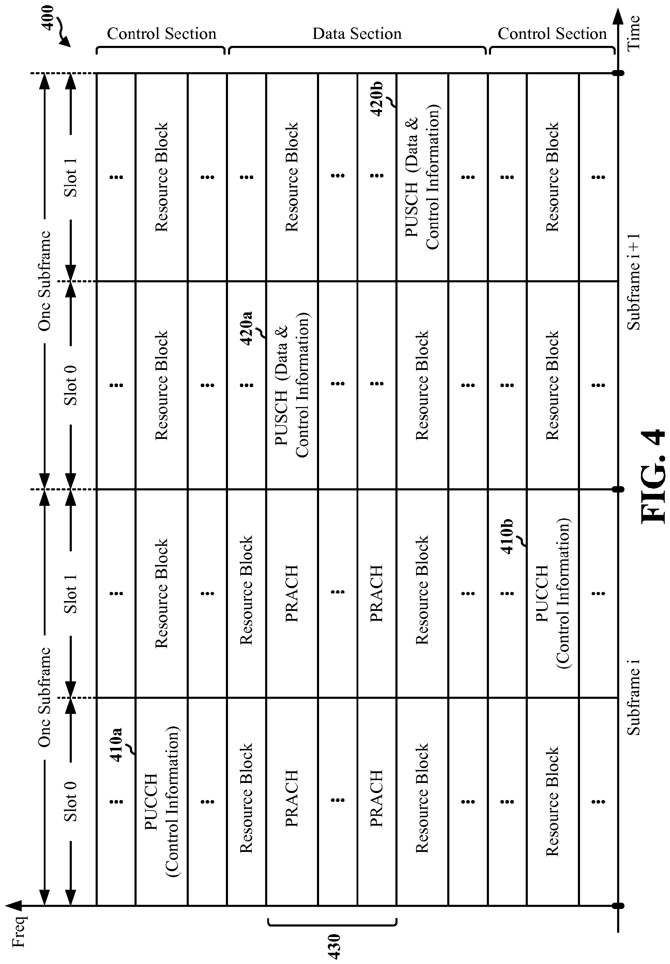

FIG. 4 is a diagram 400 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make only a single PRACH attempt per frame (10 ms).

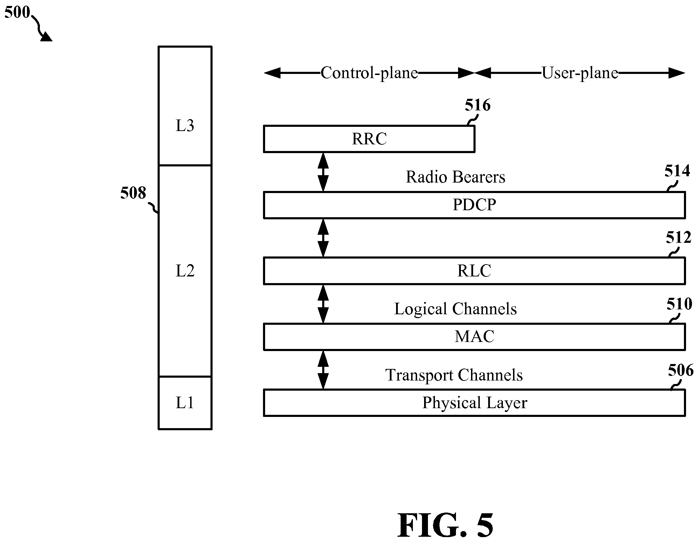

FIG. 5 is a diagram 500 illustrating an example of a radio protocol architecture for the user and control planes in LTE. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and eNB over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the eNB on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between eNBs. The RLC sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and eNB is substantially the same for the physical layer 506 and the L2 layer 508 with the exception that there is no header compression function for the control plane. The control plane also includes a radio resource control (RRC) sublayer 516 in Layer 3 (L3 layer). The RRC sublayer 516 is responsible for obtaining radio resources (e.g., radio bearers) and for configuring the lower layers using RRC signaling between the eNB and the UE.

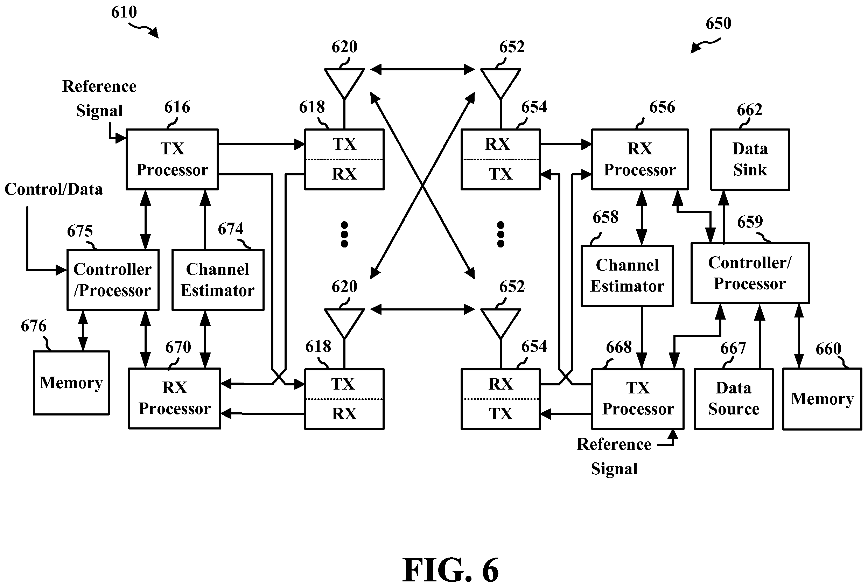

FIG. 6 is a block diagram of an eNB 610 in communication with a UE 650 in an access network. In the DL, upper layer packets from the core network are provided to a controller/processor 675. The controller/processor 675 implements the functionality of the L2 layer. In the DL, the controller/processor 675 provides header compression, ciphering, packet segmentation and reordering, multiplexing between logical and transport channels, and radio resource allocations to the UE 650 based on various priority metrics. The controller/processor 675 is also responsible for HARQ operations, retransmission of lost packets, and signaling to the UE 650.

The transmit (TX) processor 616 implements various signal processing functions for the L1 layer (i.e., physical layer). The signal processing functions include coding and interleaving to facilitate forward error correction (FEC) at the UE 650 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 674 may be used to determine the coding and modulation scheme, as well as for spatial processing. The channel estimate may be derived from a reference signal and/or channel condition feedback transmitted by the UE 650. Each spatial stream may then be provided to a different antenna 620 via a separate transmitter 618TX. Each transmitter 618TX may modulate an RF carrier with a respective spatial stream for transmission.

At the UE 650, each receiver 654RX receives a signal through its respective antenna 652. Each receiver 654RX recovers information modulated onto an RF carrier and provides the information to the receive (RX) processor 656. The RX processor 656 implements various signal processing functions of the L1 layer. The RX processor 656 may perform spatial processing on the information to recover any spatial streams destined for the UE 650. If multiple spatial streams are destined for the UE 650, they may be combined by the RX processor 656 into a single OFDM symbol stream. The RX processor 656 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the eNB 610. These soft decisions may be based on channel estimates computed by the channel estimator 658. The soft decisions are then decoded and deinterleaved to recover the data and control signals that were originally transmitted by the eNB 610 on the physical channel. The data and control signals are then provided to the controller/processor 659.

The controller/processor 659 implements the L2 layer. The controller/processor can be associated with a memory 660 that stores program codes and data. The memory 660 may be referred to as a computer-readable medium. In the UL, the controller/processor 659 provides demultiplexing between transport and logical channels, packet reassembly, deciphering, header decompression, control signal processing to recover upper layer packets from the core network. The upper layer packets are then provided to a data sink 662, which represents all the protocol layers above the L2 layer. Various control signals may also be provided to the data sink 662 for L3 processing. The controller/processor 659 is also responsible for error detection using an acknowledgement (ACK) and/or negative acknowledgement (NACK) protocol to support HARQ operations.

In the UL, a data source 667 is used to provide upper layer packets to the controller/processor 659. The data source 667 represents all protocol layers above the L2 layer. Similar to the functionality described in connection with the DL transmission by the eNB 610, the controller/processor 659 implements the L2 layer for the user plane and the control plane by providing header compression, ciphering, packet segmentation and reordering, and multiplexing between logical and transport channels based on radio resource allocations by the eNB 610. The controller/processor 659 is also responsible for HARQ operations, retransmission of lost packets, and signaling to the eNB 610.

Channel estimates derived by a channel estimator 658 from a reference signal or feedback transmitted by the eNB 610 may be used by the TX processor 668 to select the appropriate coding and modulation schemes, and to facilitate spatial processing. The spatial streams generated by the TX processor 668 may be provided to different antenna 652 via separate transmitters 654TX. Each transmitter 654TX may modulate an RF carrier with a respective spatial stream for transmission.

The UL transmission is processed at the eNB 610 in a manner similar to that described in connection with the receiver function at the UE 650. Each receiver 618RX receives a signal through its respective antenna 620. Each receiver 618RX recovers information modulated onto an RF carrier and provides the information to a RX processor 670. The RX processor 670 may implement the L1 layer.

The controller/processor 675 implements the L2 layer. The controller/processor 675 can be associated with a memory 676 that stores program codes and data. The memory 676 may be referred to as a computer-readable medium. In the UL, the control/processor 675 provides demultiplexing between transport and logical channels, packet reassembly, deciphering, header decompression, control signal processing to recover upper layer packets from the UE 650. Upper layer packets from the controller/processor 675 may be provided to the core network. The controller/processor 675 is also responsible for error detection using an ACK and/or NACK protocol to support HARQ operations.

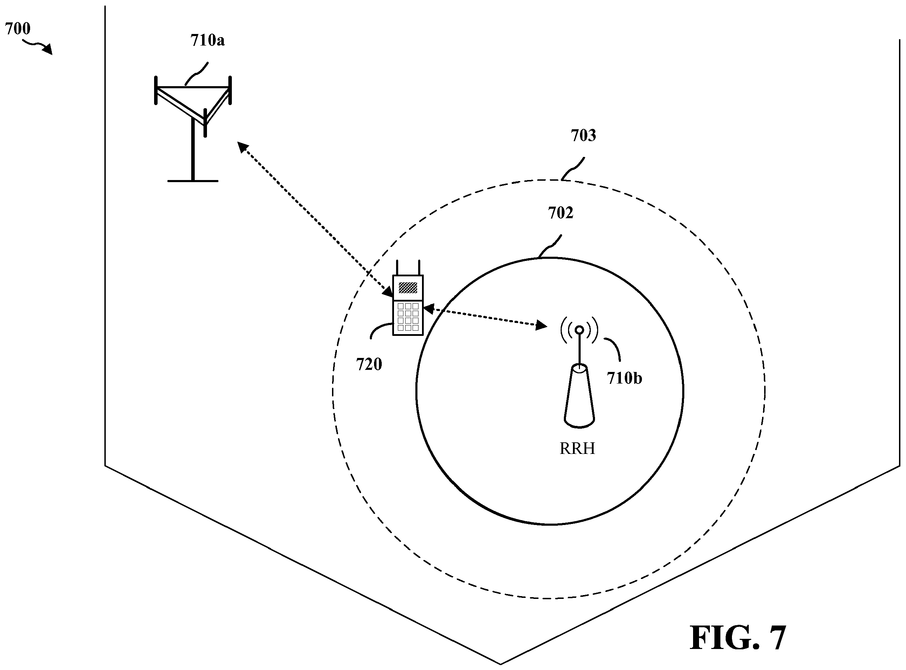

FIG. 7 is a diagram 700 illustrating a range expanded cellular region in a heterogeneous network. A lower power class eNB such as the RRH 710b may have a range expanded cellular region 703 that is expanded from the cellular region 702 through enhanced inter-cell interference coordination between the RRH 710b and the macro eNB 710a and through interference cancelation performed by the UE 720. In enhanced inter-cell interference coordination, the RRH 710b receives information from the macro eNB 710a regarding an interference condition of the UE 720. The information allows the RRH 710b to serve the UE 720 in the range expanded cellular region 703 and to accept a handoff of the UE 720 from the macro eNB 710a as the UE 720 enters the range expanded cellular region 703.

Common reference signal interference cancelation (CRS-IC) is a key feature enabling Inter-Cell Interference Coordination (ICIC) gains, for example, in Release 11 (Rel11). In a heterogeneous network, small cells have large bias configured toward the small cells, and thus UEs in the small cells may experience significant interference. Further, high power cells such as macro cells configure restricted measurements on almost blank subframes (ABS). Therefore, because the UE is likely to experience high interference in the heterogeneous network, cancellation of the interference is advantageous in the heterogeneous network.

On the contrary, in a homogeneous network, there is no large bias in power in cells. In one example (e.g., in Release 12 (Rel12)), radio access network 4 (RAN4) may assess the performance of CRS-IC for homogeneous networks by focusing on non-colliding cases and by considering potential demodulation performance gains for low bias scenarios. Interference from the reference signal that is non-colliding may also be canceled regardless of power.

In the homogeneous network, a performance gain by using the CRS-IC is not uniform and is likely to vary. That is, in the homogeneous network, using the CRS-IC may provide a high performance gain for one scenario, and may provide a low performance gain for another scenario. The following conditions may affect benefits of performing the interference cancellation in the homogeneous network. For example, the CRS-IC is proposed for non-colliding cells at first. There is no CRS-IC for channel quality indicator (CQI) reporting. UEs located at edges of a cell (e.g., edge UEs) may experience more benefit from the CRS-IC than UEs away from edges of the cell (e.g., center UEs) because there is more interference at edges of the cell. As a network load increases, the UE performance may diminish. The UE may be power constrained (e.g., due to conditions related to voice over LTE (VoLTE), Connected Discontinuous Reception (CDRX), a power preference indicator (PPI)). In such a case, CRS-IC may reduce the UE's battery life and thus reduce talk-time using the UE.

Accordingly, in the homogenous, advantages of the interference cancellation may vary depending on the conditions mentioned above. At least for the reasons stated above, optimization of CRS-IC triggering based on network conditions and UE conditions is desired in a homogeneous network.

The following describes an example signal (*NeighCellsCRS-Info-r11*) that carries information on neighbor cells CRS information.

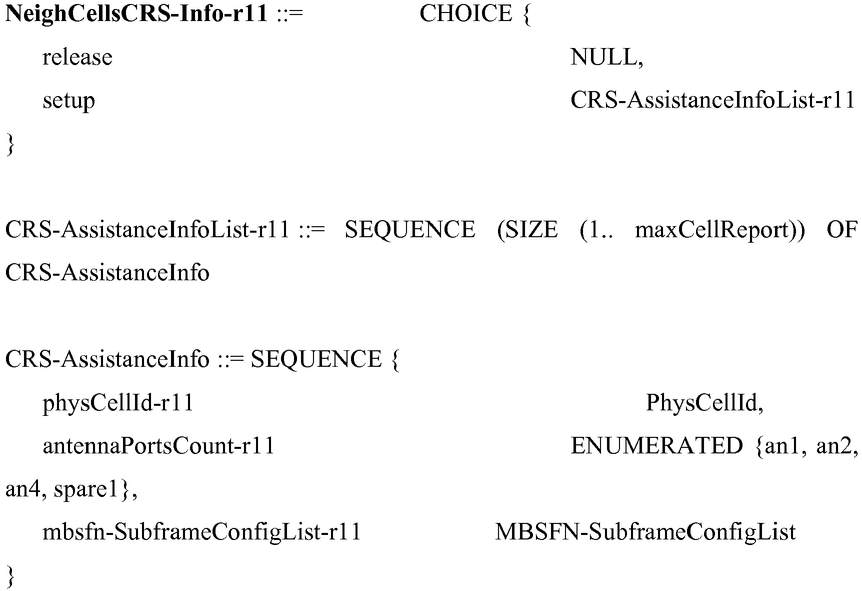

In the HetNet scenario, the network signals NeighCellsCRS-Info-r11 in combination with subframe patterns for Radio Resource Management/Radio Link Monitoring/Channel State Information (RRM/RLM/CSI) to the UE. In the HetNet scenario, NeighCellsCRS-Info-r11 establishes triggering conditions for CRS-IC at the UE. On the contrary, in non-HetNet scenarios (e.g., a homogeneous network), the UE behavior for a case where the network signals only NeighCellsCRS-Info-r11 is generally not specified, and the subframe patterns for RRM/RLM/CSI are not configured by the network. For example, according to the specification for NeighCellsCRS-Info-r11, using an information element (IE) to trigger interference cancellation (IC) for demodulation is not mandated. The specification for NeighCellsCRS-Info-r11 states that the UE may use CRS assistance information to mitigate CRS interference from the cells in the IE for the demodulation purpose.

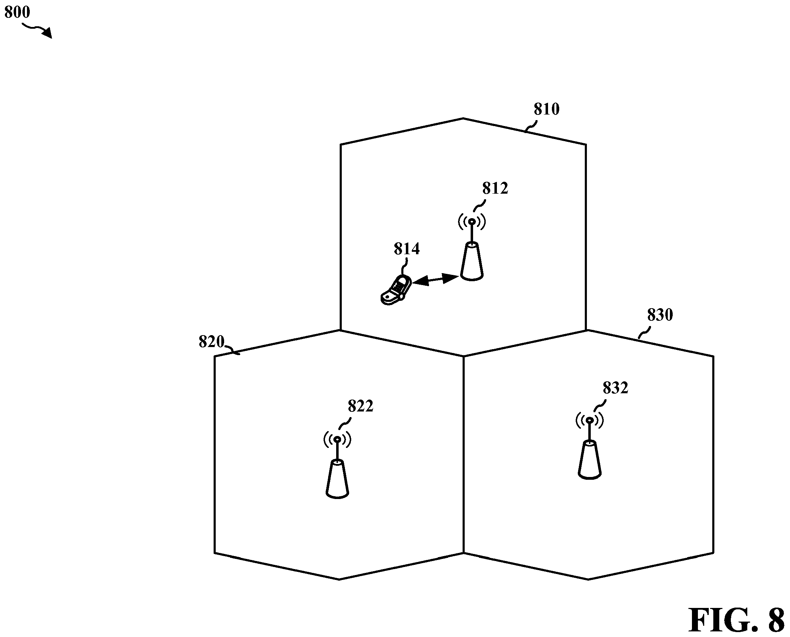

FIG. 8 is a diagram illustrating a homogeneous network 800 with cells 810, 820, and 804 of the same type. For example, the cells 810, 820, and 804 may be macro cells. It is noted that, instead of the macro cells, the homogeneous network 800 may include the same type of cells other than macro cells. The cells 810, 820, and 804 include eNBs 812, 822, and 832, respectively. The eNB 812 may communicate with an UE 814 in the homogeneous network 800 to control triggering of the CRS-IC at the UE 814.

In a first embodiment, the eNB 812 signals NeighCellsCRS-Info-r11 to the UE 814 without regarding UE-specific conditions. The UE 814 may be a Rel12 UE. For example, if the cell/network loading meets certain criteria, the eNB 812 signals all Rel12 UEs (e.g., UE 814) the IE to trigger CRS-IC. In particular, if the network is heavily loaded, then CRS-IC does not provide much advantage because the relative gain is marginal, considering that most interference comes from traffic rather than from pilot. If the network is lightly loaded, then a fraction of interference coming from the pilot can be significant, and thus the UE benefits from the CRS-IC. Thus, if the network loading is heavy, then the eNB 812 may avoid triggering the CRS-IC, whereas if the network loading is light, the eNB 812 may signal the UE 814 to trigger the CRS-IC.

The following UE behaviors may be observed when, for example, the UE is a Rel12 UE. According to the first behavior, the UE shall perform CRS-IC for demodulation if it receives the IE NeighCellsCRS-Info-r11. According to the second behavior, UE may perform CRS-IC if it receives the IE without restricted measurement configuration for RRM/RLM/CSI.

The first embodiment provides several advantages. First, no new signaling is necessary because NeighCellsCRS-Info-r11 can be used to signal the UE 814 with regard to triggering the CRS-IC. Second, in a case of the second behavior, there are no changes on the UE 814 because the second behavior allows the UE 814 to decide whether to perform CRS-IC.

In a second embodiment, the eNB 812 signals the UE 814 to trigger the CRS-IC if the eNB 812 determines that the UE 814 will benefit from the CRS-IC based on the UE conditions. The UE 814 performs CRS-IC for demodulations if the eNB 812 signals NeighCellsCRS-Info-r11 to the UE 814, which is the same behavior as the first behavior of the first embodiment. The UE 814 may be a Rel12 UE. In the second embodiment, the eNB 812 makes the decision to trigger CRS-IC on a per UE basis. Thus, if a certain criterion is satisfied, the eNB 812 transmits an IE to the UE 814 to trigger CRS-IC at the UE 814. The second embodiment is advantageous in that there is no new signaling and the network takes the UE 814 into account when optimizing demodulation performance.

In the second embodiment, the criteria that are considered in triggering CRS-IC by the eNB 812 may include a traffic type, a CDRX condition, a PPI condition on the UE 814 side, and a UE radio frequency (RF) condition. If the traffic type indicates that UE 814 is served with voice traffic (e.g., VoLTE) or background-type (light) traffic, the eNB 812 avoids CRS-IC triggering. For example, because it is preferred to maintain low battery consumption with the voice traffic or the background-type traffic, CRS-IC that consumes battery power may not be desirable. For the CDRX condition, at least the following two options may exist for controlling CRS-IC triggering. In an aspect, because battery consumption may be high with CDRX, it may be desirable to avoid CRS-IC triggering in certain CDRX conditions. In one option, if the CDRX condition indicates that the UE 814 has the CDRX enabled, the eNB 812 avoids CRS-IC triggering. In another option, the eNB 812 avoids CRS-IC triggering depending on the CDRX configuration (e.g., CDRX cycles). For example, if the CDRX configuration keeps UE 814 in DRX OFF most of the time, the eNB 812 avoids turning CRS-IC on. If the PPI condition indicates that the UE 814 has signaled low power preference to the eNB 812 (e.g., via *powerPrefIndication* IE), the eNB 812 avoids triggering CRS-IC. In another example, the PPI may indicate whether a low power or a high power is preferred, and CRS-IC triggering is avoided to conserve power at the UE 814 if the low power is preferred.

With regard to the UE RF condition, the following approaches may be used to consider the RF conditions in determining whether to trigger CRS-IC. In a first approach, the eNB 812 considers a reference signal received power (RSRP) of a serving cell(s) and/or an RSRP of a neighbor cell(s) to determine whether to trigger the CRS-IC. For example, if the RSRP of the serving cell is greater than a first threshold and/or if the RSRP of the neighbor cell is less than a second threshold, the eNB 812 avoids triggering CRS-IC. In a second approach, the eNB 812 considers a difference between an RSRP of a serving cell and an RSRP of a neighbor cell to determine whether to trigger the CRS-IC. For example, a difference between an RSRP of a serving cell and an RSRP of a neighbor cell is greater than a third threshold, the eNB 812 avoids triggering CRS-IC. In a third approach, a received energy (Es) from a serving cell, a total interference (e.g., interference over thermal (lot)) and a background noise power spectral density (Noc) are considered to determine whether to trigger the CRS-IC. For example, if serving cell Es/Iot is greater than a fourth threshold and serving cell Es/Noc is less than a fifth threshold, the eNB 812 avoids triggering CRS-IC. In a fourth approach, a received energy (Es) from a neighbor cell, a total interference (e.g., lot) and an Noc are considered to determine whether to trigger the CRS-IC. For example, if neighbor cell Es/Iot is greater than a sixth threshold and neighbor cell Es/Noc is less than a seventh threshold, the eNB 812 avoids triggering CRS-IC.

In a third embodiment, the UE 814 autonomously triggers the CRS-IC. The UE 814 may be a Rel12 UE. The UE 814 may perform CRS-IC for demodulation if the eNB 812 signals the IE NeighCellsCRS-Info-r11 to the UE 814. Thus, the UE 814 may perform in a similar manner to the Rel11 UE. Once the UE 814 receives the IE from the eNB 812, the UE optimizes the CRS-IC triggering by determining whether to trigger the CRS-IC based on various criteria. The criteria that are considered in triggering CRS-IC by the UE 814 may include a traffic type, a Connected Discontinuous Reception (CDRX) condition, a power preference indicator (PPI) condition on the UE 814 side, and a UE radiofrequency (RF) condition. The UE 814 may additionally consider other criteria such as a UE power mode and UE internal measurements that are unknown to the network. The third embodiment is advantageous in that because the UE makes a final decision as to whether to trigger CRS-IC, UE flexibility is retained. Further, there are no specification changes in the third embodiment because the third embodiment uses the same specification as the specification of Rel11.

In the third embodiment, if the traffic type indicates that UE 814 is served with voice traffic (e.g., voice over LTE (VoLTE)) or background-type (light) traffic, the UE 814 avoids CRS-IC triggering. In one option, if the CDRX condition indicates that the UE 814 has CDRX enabled, the UE 814 avoids CRS-IC triggering at the UE 814. In another option, the UE 814 avoids CRS-IC triggering at the UE 814 depending on the CDRX configuration (e.g., CDRX cycles). For example, if the CDRX configuration keeps UE 814 in DRX OFF most of the time, the UE 814 avoids turning CRS-IC on. If the PPI condition indicates that the UE 814 has signaled low power preference to the eNB 812 (e.g., via *powerPrefIndication* IE), the UE 814 avoids CRS-IC triggering at the UE 814. For example, the PPI may indicate whether a low power or a high power is preferred, and CRS-IC triggering is avoided to conserve power at the UE 814 if the low power is preferred.

With regard to the UE RF condition, the following approaches may be used to consider the RF conditions in determining whether to trigger CRS-IC. In a first approach, the eNB 812 considers an RSRP of a serving cell(s) and/or an RSRP of a neighbor cell(s) to determine whether to trigger the CRS-IC. For example, if the RSRP of the serving cell is greater than a first threshold and/or if the RSRP of the neighbor cell is less than a second threshold, the UE 814 avoids CRS-IC triggering at the UE 814. In a second approach, the eNB 812 considers a difference between an RSRP of a serving cell and an RSRP of a neighbor cell to determine whether to trigger the CRS-IC. For example, a difference between an RSRP of a serving cell and an RSRP of a neighbor cell is greater than a third threshold, the UE 814 avoids CRS-IC triggering at the UE 814. In a third approach, a received energy (Es) from a serving cell, a total interference (e.g., lot) and an Noc are considered to determine whether to trigger the CRS-IC. For example, if serving cell Es/Iot is greater than a fourth threshold and serving cell Es/Noc is less than a fifth threshold, the UE 814 avoids CRS-IC triggering at the UE 814. In a fourth approach, a received energy (Es) from a neighbor cell, a total interference (e.g., lot) and an Noc are considered to determine whether to trigger the CRS-IC. For example, if neighbor cell Es/Iot is greater than a sixth threshold and neighbor cell Es/Noc is less than a seventh threshold, the UE 814 avoids CRS-IC triggering at the UE 814.

In a fourth embodiment, the UE 814 signals to the eNB 812 a preference indication of the UE 814 regarding the CRS-IC via a new capability field. The following two approaches may be utilized for the fourth embodiment. In the first approach, the UE 814 that may be the Rel12 UE introduces a new value for *powerPrefIndication* IE in the *UEAssistanceInformation* message. Generally, *powerPrefIndication* IE has only two values (e.g., in Rel11), which are *normal* and *lowPowerConsumption.* In addition to the two values, a new preference indication value *wPowerConsumption-r12* is introduced for *powerPrefIndication* IE according to the first approach, such that the UE 814 may provide the new preference indication regarding the CRS-IC to the eNB 812. In the second approach, the UE 814 introduces a new IE altogether for the CRS-IC preference to provide a new preference indication regarding the CRS-IC to the eNB 812 via the new IE. When the eNB 812 receives the new preference indication from the UE 814, the eNB 812 may decide whether to turn off CRS-IC for the UE 814 according to the new preference indication. In one aspect, the eNB 812 may release the *NeighCellsCRS-Info-r11* list. The fourth embodiment is advantageous in that the eNB 812 can take the UE preference into account in determining whether to turn off CRS-IC for the UE 814.

The features of the first to fourth embodiments may be utilized in combination with one another. For example, the first embodiment with the second UE behavior may be combined with the third embodiment.

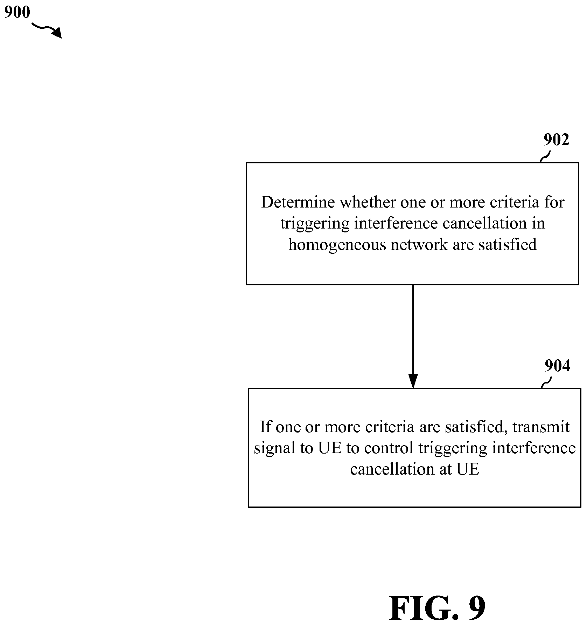

FIG. 9 is a flow chart 900 of a method of CRS-IC triggering in a homogeneous network, according to one embodiment. The method may be performed by the eNB. At step 902, the eNB determines whether criteria for triggering interference cancellation in a homogeneous network are satisfied. At step 904, if the one or more criteria are satisfied, the eNB transmits a signal to a UE to control triggering the interference cancellation at the UE.

Referring back to FIG. 8, the eNB 812 determines whether criteria for triggering interference cancellation (e.g., CRS-IC) in a homogeneous network are satisfied. If the criteria are satisfied, the eNB 812 transmits a signal to the UE 814 to control triggering the interference cancellation at the UE 814. The criteria may not be associated with a UE specific condition, and may include network loading conditions. The transmitted signal may be an information element (IE) to cause triggering the interference cancellation at the UE 814. The IE may be transmitted without time-division restricted measurements being configured for Radio Resource Management/Radio Link Monitoring/Channel State Information (RRM/RLM/CSI), to optionally trigger the interference cancellation at the UE 814.

The criteria may be associated with UE specific conditions. The criteria associated with the UE specific conditions may include at least one of a traffic type, a Connected Discontinuous Reception (CDRX) condition, a power preference indicator (PPI) condition, or a UE radio frequency (RF) condition. If the traffic type indicates that the UE 814 is served with voice traffic or background-type traffic, the eNB 812 refrains from transmitting to the UE 814 the signal that triggers the interference cancellation. If the CDRX condition indicates that CDRX is enabled in the UE 814, the eNB 812 refrains from transmitting to the UE 814 the signal that triggers the interference cancellation. If the CDRX condition indicates a CDRX configuration, the eNB 812 determines to refrain from transmitting to the UE 814 the signal that triggers the interference cancellation based on the CDRX configuration. If the PPI indicates that the UE 814 signals low power preference to the eNB 812, the eNB 812 refrains from transmitting to the UE 814 the signal that triggers the interference cancellation.

According to the RF condition, if one of first and second conditions is satisfied, the eNB 812 refrains from transmitting to the UE 814 the signal that triggers the interference cancellation, where the first condition is that a reference signal received power (RSRP) of a serving cell is greater than a first threshold, and the second condition is that an RSRP of a neighbor cell is less than a second threshold. According to the RF condition, if a difference between an RSRP of a serving cell and an RSRP of a neighbor cell is greater than a third threshold, the eNB 812 refrains from transmitting to the UE 814 the signal that triggers the interference cancellation. According to the RF condition, if one of third and fourth conditions is satisfied, the eNB 812 refrains from transmitting to the UE 814 the signal that triggers the interference cancellation, where the third condition is that a received energy from a serving cell per total interference is greater than a fourth threshold, and the fourth condition is that the received energy from the serving cell per background noise power spectral density is less than a fifth threshold. According to the RF condition, if one of fifth and sixth conditions is satisfied, the eNB 812 refrains from transmitting to the UE 814 the signal that triggers the interference cancellation, where the fifth condition is that a received energy from a neighbor cell per total interference is greater than a sixth threshold, and the sixth condition is that the received energy from the neighbor cell per background noise power spectral density is less than a seventh threshold.

If the criteria are satisfied to deactivate the interference cancellation that has been previously triggered at the UE 814, the eNB 812 transmits the signal to the UE 814 to deactivate the interference cancellation. The criteria may include a UE preference received from the UE 814, the preference regarding the interference cancellation, and if the one or more criteria are satisfied, the signal is transmitted to the UE 814 to deactivate the interference cancellation. The UE preference may be associated with a power consumption level of the UE 814.

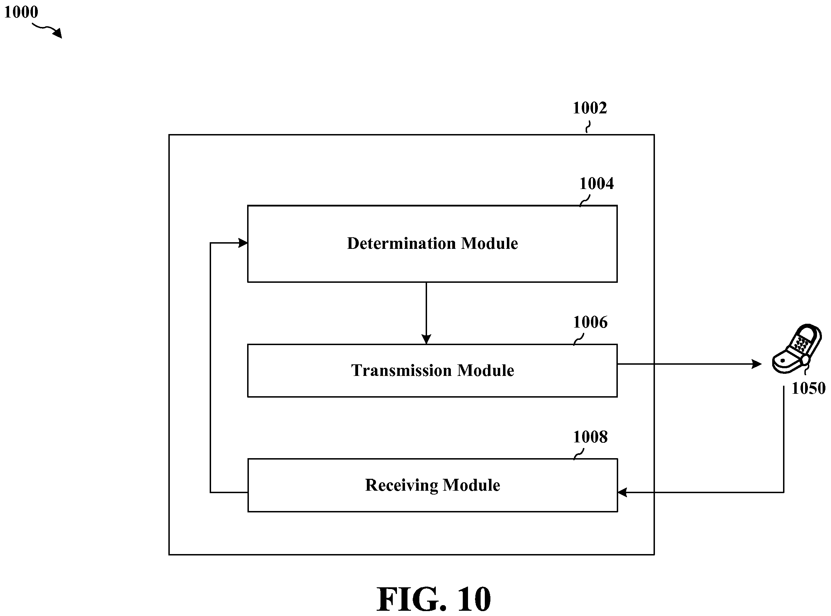

FIG. 10 is a conceptual data flow diagram 1000 illustrating the data flow between different modules/means/components in an exemplary apparatus 1002. The apparatus may be an eNB. The apparatus includes a determination module 1004 that determines whether one or more criteria for triggering interference cancellation in a homogeneous network are satisfied, and a transmission module 1006 that transmits a signal to a UE 1050 to control triggering the interference cancellation at the UE 1050 if the one or more criteria are satisfied. The apparatus further includes a receiving module 1008 to receive data from the UE 1050.

In an aspect, the one or more criteria are not associated with a UE specific condition and include network loading conditions. In an aspect, the transmitted signal is an IE to cause triggering the interference cancellation at the UE 1050. In an aspect, the IE is transmitted without time-division restricted measurements being configured for RRM/RLM/CSI, to optionally trigger the interference cancellation at the UE 1050.

In an aspect, the one or more criteria are associated with one or more UE specific conditions and include at least one of a traffic type, a CDRX condition, a PPI condition, or a UE RF condition. In such an aspect, if the traffic type indicates that the UE 1050 is served with voice traffic or background-type traffic, the eNB via the determination module 1004 refrains from transmitting to the UE 1050 the signal that triggers the interference cancellation. In such an aspect, if the CDRX condition indicates that CDRX is enabled in the UE 1050, the eNB via the determination module 1004 refrains from transmitting to the UE 1050 the signal that triggers the interference cancellation. In such an aspect, if the CDRX condition indicates a CDRX configuration, the eNB determines via the determination module 1004 to refrain from transmitting to the UE 1050 the signal that triggers the interference cancellation based on the CDRX configuration. In such an aspect, if the PPI indicates that the UE 1050 signals low power preference to the eNB via the receiving module 1008, the eNB refrains via the determination module 1004 from transmitting to the UE the signal that triggers the interference cancellation.

In such an aspect, according to the RF condition, if one of first and second conditions is satisfied, the eNB via the determination module 1004 refrains from transmitting to the UE 1050 the signal that triggers the interference cancellation, where the first condition is that an RSRP of a serving cell is greater than a first threshold, and the second condition is that an RSRP of a neighbor cell is less than a second threshold. In such an aspect, according to the RF condition, if a difference between an RSRP of a serving cell and an RSRP of a neighbor cell is greater than a third threshold, the eNB via the determination module 1004 refrains via the determination module 1004 from transmitting to the UE 1050 the signal that triggers the interference cancellation. In such an aspect, according to the RF condition, if one of third and fourth conditions is satisfied, the eNB refrains via the determination module 1004 from transmitting to the UE 1050 the signal that triggers the interference cancellation, where the third condition is that a received energy from a serving cell per total interference is greater than a fourth threshold, and the fourth condition is that the received energy from the serving cell per background noise power spectral density is less than a fifth threshold. In such an aspect, according to the RF condition, if one of fifth and sixth conditions is satisfied, the eNB refrains via the determination module 1004 from transmitting to the UE 1050 the signal that triggers the interference cancellation, where the fifth condition is that a received energy from a neighbor cell per total interference is greater than a sixth threshold, and the sixth condition is that the received energy from the neighbor cell per background noise power spectral density is less than a seventh threshold.

In an aspect, if the one or more criteria are satisfied to deactivate the interference cancellation that has been previously triggered at the UE, the eNB transmits via the transmission module 1006 the signal to the UE 1050 to deactivate the interference cancellation. In such an aspect, the one or more criteria include a UE preference received from the UE 1050, the preference regarding the interference cancellation, and if the one or more criteria are satisfied, the signal is transmitted to the UE 1050 to deactivate the interference cancellation. In such an aspect, the UE preference is associated with a power consumption level of the UE 1050.

The apparatus may include additional modules that perform each of the steps of the algorithm in the aforementioned flow charts of FIG. 9. As such, each step in the aforementioned flow chart of FIG. 9 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

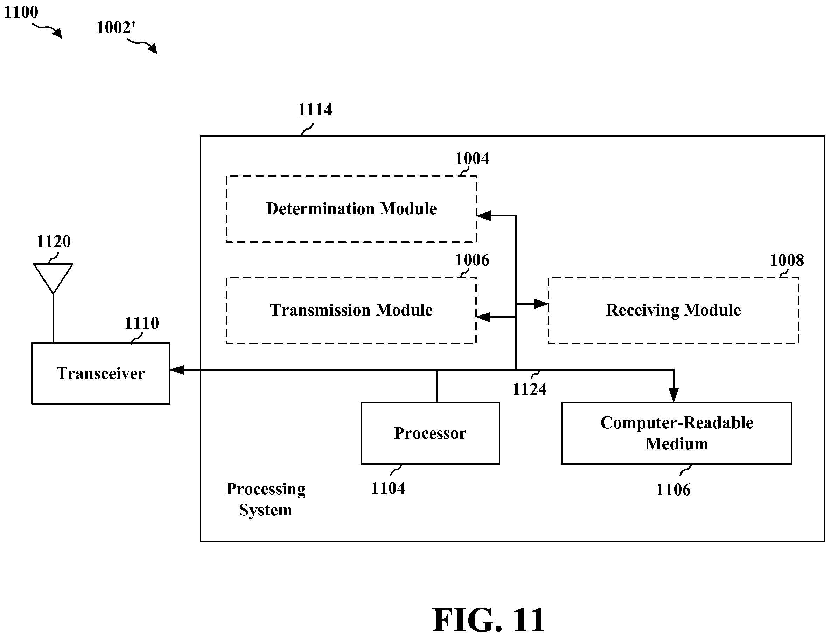

FIG. 11 is a diagram 1100 illustrating an example of a hardware implementation for an apparatus 1002' employing a processing system 1114. The processing system 1114 may be implemented with a bus architecture, represented generally by the bus 1124. The bus 1124 may include any number of interconnecting buses and bridges depending on the specific application of the processing system 1114 and the overall design constraints. The bus 1124 links together various circuits including one or more processors and/or hardware modules, represented by the processor 1104, the modules 1004, 1006, 1008, and the computer-readable medium 1106. The bus 1124 may also link various other circuits such as timing sources, peripherals, voltage regulators, and power management circuits, which are well known in the art, and therefore, will not be described any further.

The processing system 1114 may be coupled to a transceiver 1110. The transceiver 1110 is coupled to one or more antennas 1120. The transceiver 1110 provides a means for communicating with various other apparatus over a transmission medium. The transceiver 1110 receives a signal from the one or more antennas 1120, extracts information from the received signal, and provides the extracted information to the processing system 1114, specifically the receiving module 1108. In addition, the transceiver 1110 receives information from the processing system 1114, specifically the transmission module 1006, and based on the received information, generates a signal to be applied to the one or more antennas 1120. The processing system 1114 includes a processor 1104 coupled to a computer-readable medium 1106. The processor 1104 is responsible for general processing, including the execution of software stored on the computer-readable medium 1106. The software, when executed by the processor 1104, causes the processing system 1114 to perform the various functions described *supra* for any particular apparatus. The computer-readable medium 1106 may also be used for storing data that is manipulated by the processor 1104 when executing software. The processing system further includes at least one of the modules 1104, 1106, and 1108. The modules may be software modules running in the processor 1104, resident/stored in the computer readable medium 1106, one or more hardware modules coupled to the processor 1104, or some combination thereof. The processing system 1114 may be a component of the eNB 610 and may include the memory 676 and/or at least one of the TX processor 616, the RX processor 670, and the controller/processor 675.

In one configuration, the apparatus 1002/1002' for wireless communication includes means for determining whether one or more criteria for triggering interference cancellation in a homogeneous network are satisfied and means for transmitting a signal to a UE to control triggering the interference cancellation at the UE if the one or more criteria are satisfied. The aforementioned means may be one or more of the aforementioned modules of the apparatus 1002 and/or the processing system 1114 of the apparatus 1002' configured to perform the functions recited by the aforementioned means. As described *supra,* the processing system 1114 may include the TX Processor 616, the RX Processor 670, and the controller/processor 675. As such, in one configuration, the aforementioned means may be the TX Processor 616, the RX Processor 670, and the controller/processor 675 configured to perform the functions recited by the aforementioned means.

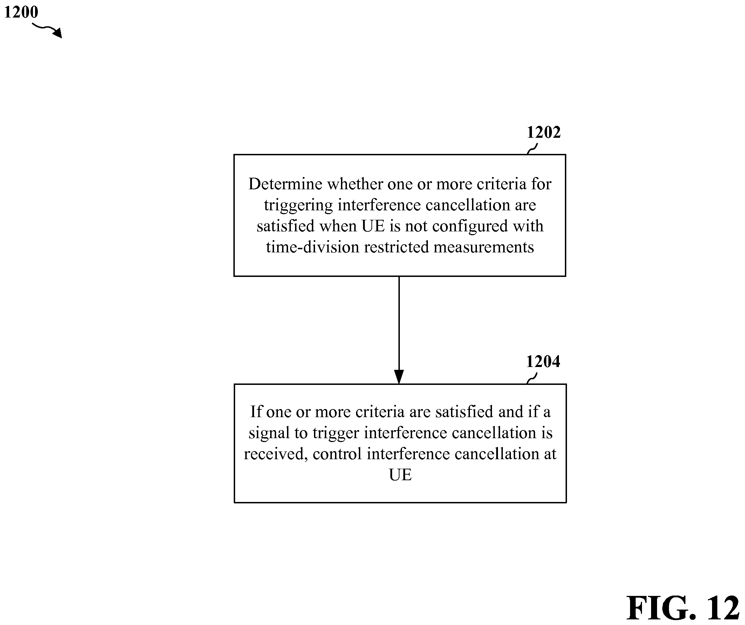

FIG. 12 is a flow chart 1200 of a method of CRS-IC triggering in a homogeneous network, according to another embodiment. The method may be performed by the UE. At step 1202, the UE determines whether one or more criteria for triggering interference cancellation are satisfied when the UE is not configured with time-division restricted measurements. At step 1204, the UE control the interference cancellation at the UE if the one or more criteria are satisfied and if a signal to trigger the interference cancellation is received.

Referring back to FIG. 8, the UE 814 determines whether criteria for triggering interference cancellation (e.g., CRS-IC) are satisfied when the UE 814 is not configured with Time-division restricted measurements. If the criteria are satisfied and if a signal to trigger the interference cancellation is received, the UE 814 controls the interference cancellation at the UE 814. The criteria may be associated with UE specific conditions. The criteria associated with the UE specific conditions may include at least one of a traffic type, a Connected Discontinuous Reception (CDRX) condition, a power preference indicator (PPI) condition, or a UE radio frequency (RF) condition. The criteria may further include one or more UE specific settings. The UE specific settings may include at least one of a UE power mode or a UE internal measurement.

If the traffic type indicates that the UE 814 is served with voice traffic or background-type traffic, the UE 814 refrains from triggering the interference cancellation at the UE 814. If the CDRX condition indicates that CDRX is enabled in the UE 814, the UE 814 refrains from triggering the interference cancellation at the UE 814. If the CDRX condition indicates a CDRX configuration, the UE 814 determines to refrain from triggering the interference cancellation at the UE 814 based on the CDRX configuration. If the PPI indicates that the UE 814 signals low power preference to the eNB 812, the UE 814 refrains from triggering the interference cancellation at the UE 814.

According to the RF condition, if one of first and second conditions is satisfied, the UE 814 refrains from triggering the interference cancellation at the UE 814, where the first condition is that a reference signal received power (RSRP) of a serving cell is greater than a first threshold, and the second condition is that an RSRP of a neighbor cell is less than a second threshold. According to the RF condition, if a difference between an RSRP of a serving cell and an RSRP of a neighbor cell is greater than a third threshold, the UE 814 refrains from triggering the interference cancellation at the UE 814. According to the RF condition, if one of third and fourth conditions is satisfied, the UE 814 refrains from triggering the interference cancellation at the UE 814, where the third condition is that a received energy from a serving cell per total interference is greater than a fourth threshold, and the fourth condition is that the received energy from the serving cell per background noise power spectral density is less than a fifth threshold. According to the RF condition, if one of fifth and sixth conditions is satisfied, the UE 814 refrains from triggering the interference cancellation at the UE 814, where the fifth condition is that a received energy from a neighbor cell per total interference is greater than a sixth threshold, and the sixth condition is that the received energy from the neighbor cell per background noise power spectral density is less than a seventh threshold.

In one aspect, the controlling the interference cancellation at the UE may include receiving a control signal while operating in a network and based on the received signal, activating the interference cancellation when not already performing the interference cancellation, or deactivating the interference cancellation when already performing the interference cancellation. In such an aspect, the control signal is received after the UE 814 transmits a preference indication associated with the interference cancellation to the eNB 812.

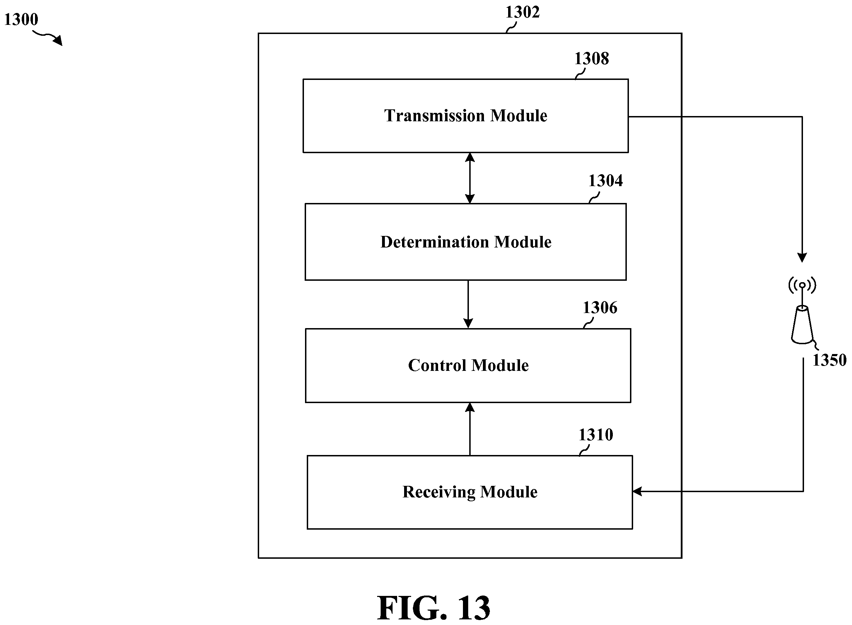

FIG. 13 is a conceptual data flow diagram 1300 illustrating the data flow between different modules/means/components in an exemplary apparatus 1302. The apparatus may be a UE. The apparatus includes a determination module 1304 that determines whether one or more criteria for triggering interference cancellation are satisfied when the UE is not configured with time-division restricted measurements, and a control module 1306 that controls the interference cancellation at the UE if the one or more criteria are satisfied and if a signal to trigger the interference cancellation is received. The apparatus further includes a transmission module 1308 to transmit data to a base station 1350, and a receiving module 1310 to receive data from the base station 1350.

In an aspect, the one or more criteria are associated with one or more UE specific conditions and include at least one of a traffic type, a Connected Discontinuous Reception (CDRX) condition, a power preference indicator (PPI) condition, or a UE radio frequency (RF) condition. In such an aspect, if the traffic type indicates that the UE is served with voice traffic or background-type traffic, the UE refrains via the determination module 1304 from triggering the interference cancellation at the UE. In such an aspect, if the CDRX condition indicates that CDRX is enabled in the UE, the UE refrains via the determination module 1304 from triggering the interference cancellation at the UE. In such an aspect, if the CDRX condition indicates a CDRX configuration, the UE determines via the determination module 1304 to refrain from triggering the interference cancellation at the UE based on the CDRX configuration. In such an aspect, if the PPI indicates that the UE signals via the transmission module 1308 low power preference to the base station 1350, the UE refrains via the determination module 1304 from triggering the interference cancellation at the UE.

In such an aspect, according to the RF condition, if one of first and second conditions is satisfied, the UE refrains via the determination module 1304 from triggering the interference cancellation at the UE, where the first condition is that a reference signal received power (RSRP) of a serving cell is greater than a first threshold, and the second condition is that an RSRP of a neighbor cell is less than a second threshold. In such an aspect, according to the RF condition, if a difference between an RSRP of a serving cell and an RSRP of a neighbor cell is greater than a third threshold, the UE refrains via the determination module 1304 from triggering the interference cancellation at the UE. In such an aspect, according to the RF condition, if one of third and fourth conditions is satisfied, the UE refrains via the determination module 1304 from triggering the interference cancellation at the UE, where the third condition is that a received energy from a serving cell per total interference is greater than a fourth threshold, and the fourth condition is that the received energy from the serving cell per background noise power spectral density is less than a fifth threshold. In such an aspect, according to the RF condition, if one of fifth and sixth conditions is satisfied, the UE refrains via the determination module 1304 from triggering the interference cancellation at the UE, where the fifth condition is that a received energy from a neighbor cell per total interference is greater than a sixth threshold, and the sixth condition is that the received energy from the neighbor cell per background noise power spectral density is less than a seventh threshold.

In such an aspect, the one or more criteria further include one or more UE specific settings, the one or more UE specific settings including at least one of a UE power mode or a UE internal measurement.

In an aspect, the controlling the interference cancellation at the UE includes receiving via a receiving module 1310 a control signal from the base station 1350 while operating in a network, and based on the received signal, activating via the control module 1306 the interference cancellation when not already performing the interference cancellation, or deactivating the interference cancellation when already performing the interference cancellation. In such an aspect, the control signal is received via the receiving module 1310 after the UE transmits via the transmission module 1308 a preference indication associated with the interference cancellation to the base station 1350.

The apparatus may include additional modules that perform each of the steps of the algorithm in the aforementioned flow chart of FIG. 12. As such, each step in the aforementioned flow charts of FIG. 12 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

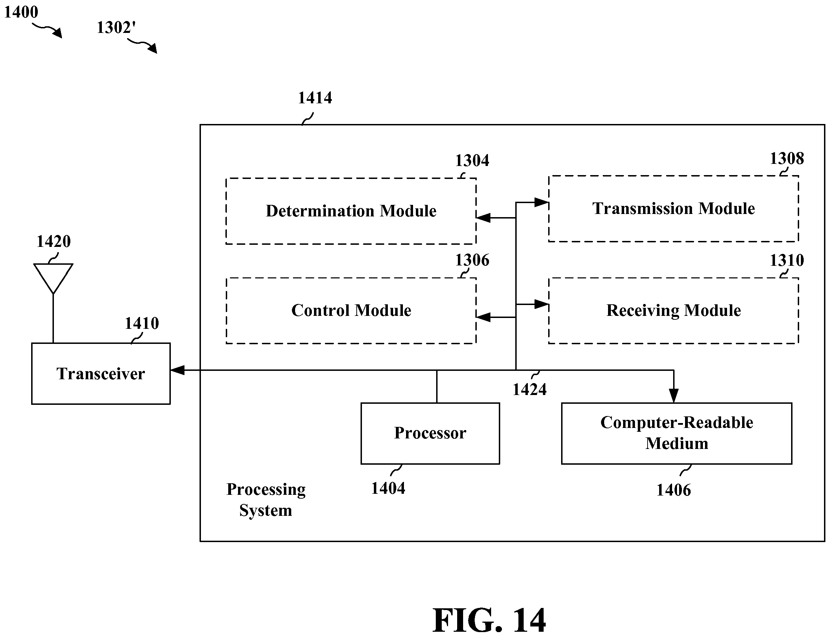

FIG. 14 is a diagram 1400 illustrating an example of a hardware implementation for an apparatus 1302' employing a processing system 1414. The processing system 1414 may be implemented with a bus architecture, represented generally by the bus 1424. The bus 1424 may include any number of interconnecting buses and bridges depending on the specific application of the processing system 1414 and the overall design constraints. The bus 1424 links together various circuits including one or more processors and/or hardware modules, represented by the processor 1404, the modules 1304, 1306, 1308, 1310, and the computer-readable medium 1406. The bus 1424 may also link various other circuits such as timing sources, peripherals, voltage regulators, and power management circuits, which are well known in the art, and therefore, will not be described any further.

The processing system 1414 may be coupled to a transceiver 1410. The transceiver 1410 is coupled to one or more antennas 1420. The transceiver 1410 provides a means for communicating with various other apparatus over a transmission medium. The transceiver 1410 receives a signal from the one or more antennas 1420, extracts information from the received signal, and provides the extracted information to the processing system 1414, specifically the receiving module 1310. In addition, the transceiver 1410 receives information from the processing system 1414, specifically the transmission module 1308, and based on the received information, generates a signal to be applied to the one or more antennas 1420. The processing system 1414 includes a processor 1404 coupled to a computer-readable medium 1406. The processor 1404 is responsible for general processing, including the execution of software stored on the computer-readable medium 1406. The software, when executed by the processor 1404, causes the processing system 1414 to perform the various functions described *supra* for any particular apparatus. The computer-readable medium 1406 may also be used for storing data that is manipulated by the processor 1404 when executing software. The processing system further includes at least one of the modules 1304,1306, 1308, and 1310. The modules may be software modules running in the processor 1404, resident/stored in the computer readable medium 1406, one or more hardware modules coupled to the processor 1404, or some combination thereof. The processing system 1414 may be a component of the UE 650 and may include the memory 660 and/or at least one of the TX processor 668, the RX processor 656, and the controller/processor 659.

In one configuration, the apparatus 1302/1302' for wireless communication includes means for determining whether one or more criteria for triggering interference cancellation are satisfied when the UE is not configured with time-division restricted measurements and means for controlling the interference cancellation at the UE if the one or more criteria are satisfied and if a signal to trigger the interference cancellation is received. The aforementioned means may be one or more of the aforementioned modules of the apparatus 1302 and/or the processing system 1414 of the apparatus 1302' configured to perform the functions recited by the aforementioned means. As described *supra,* the processing system 1414 may include the TX Processor 668, the RX Processor 656, and the controller/processor 659. As such, in one configuration, the aforementioned means may be the TX Processor 668, the RX Processor 656, and the controller/processor 659 configured to perform the functions recited by the aforementioned means.

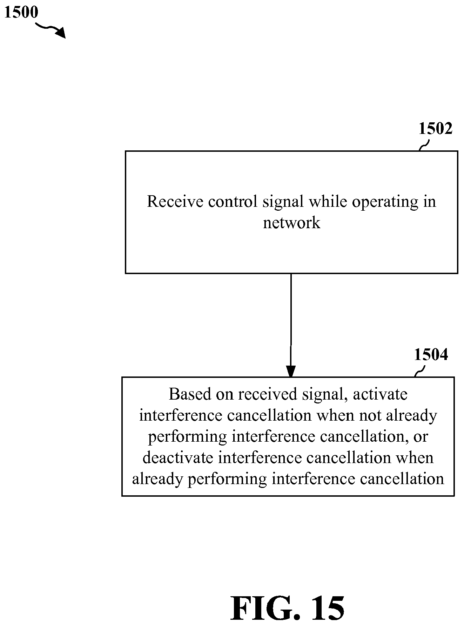

FIG. 15 is a flow chart 1500 of a method of CRS-IC triggering in a homogeneous network, according to another embodiment. The method may be performed by the UE. At step 1502, the UE receives a control signal while operating in a network. At step 1504, based on the received signal, the UE activates interference cancellation when not already performing interference cancellation, or deactivates interference cancellation when already performing interference cancellation.

Referring back to FIG. 8, the UE 814 receiving a control signal while operating in a network. Based on the received signal, the UE 814 activates interference cancellation when not already performing interference cancellation, or deactivates interference cancellation when already performing interference cancellation.

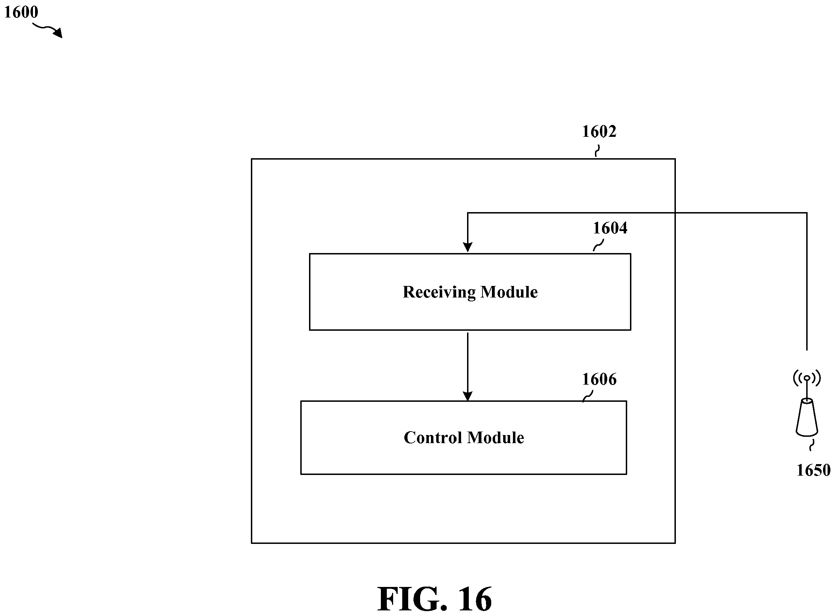

FIG. 16 is a conceptual data flow diagram 1600 illustrating the data flow between different modules/means/components in an exemplary apparatus 1602. The apparatus may be a UE. The apparatus includes a receiving module 1604 that receives a control signal while operating in a network, and a control module 1606 that activates interference cancellation when not already performing interference cancellation, or deactivates interference cancellation when already performing interference cancellation, based on the received signal.

The apparatus may include additional modules that perform each of the steps of the algorithm in the aforementioned flow chart of FIG. 12. As such, each step in the aforementioned flow chart of FIG. 12 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

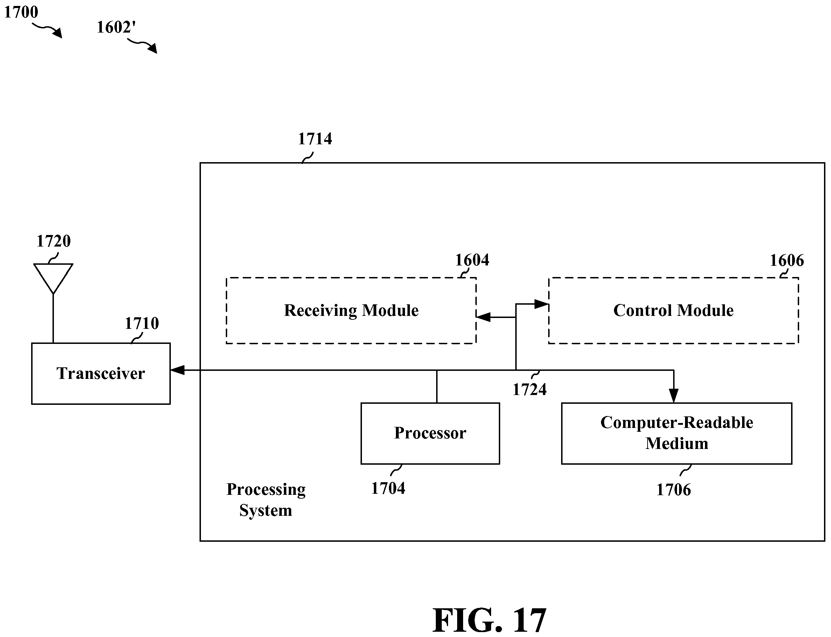

FIG. 17 is a diagram 1700 illustrating an example of a hardware implementation for an apparatus 1602' employing a processing system 1714. The processing system 1714 may be implemented with a bus architecture, represented generally by the bus 1724. The bus 1724 may include any number of interconnecting buses and bridges depending on the specific application of the processing system 1714 and the overall design constraints. The bus 1724 links together various circuits including one or more processors and/or hardware modules, represented by the processor 1704, the modules 1604, 1606, and the computer-readable medium 1706. The bus 1724 may also link various other circuits such as timing sources, peripherals, voltage regulators, and power management circuits, which are well known in the art, and therefore, will not be described any further.

The processing system 1714 may be coupled to a transceiver 1710. The transceiver 1710 is coupled to one or more antennas 1720. The transceiver 1710 provides a means for communicating with various other apparatus over a transmission medium. The transceiver 1710 receives a signal from the one or more antennas 1720, extracts information from the received signal, and provides the extracted information to the processing system 1714, specifically the receiving module 1604. In addition, the transceiver 1710 receives information from the processing system 1714, and based on the received information, generates a signal to be applied to the one or more antennas 1720. The processing system 1714 includes a processor 1704 coupled to a computer-readable medium 1706. The processor 1704 is responsible for general processing, including the execution of software stored on the computer-readable medium 1706. The software, when executed by the processor 1704, causes the processing system 1714 to perform the various functions described *supra* for any particular apparatus. The computer-readable medium 1706 may also be used for storing data that is manipulated by the processor 1704 when executing software. The processing system further includes at least one of the modules 1604 and 1606. The modules may be software modules running in the processor 1704, resident/stored in the computer readable medium 1706, one or more hardware modules coupled to the processor 1704, or some combination thereof. The processing system 1714 may be a component of the UE 650 and may include the memory 660 and/or at least one of the TX processor 668, the RX processor 656, and the controller/processor 659.

In one configuration, the apparatus 1602/1602' for wireless communication includes means for receiving a control signal while operating in a network and means for activating interference cancellation when not already performing interference cancellation, or deactivating interference cancellation when already performing interference cancellation, based on the received signal. The aforementioned means may be one or more of the aforementioned modules of the apparatus 1602 and/or the processing system 1714 of the apparatus 1602' configured to perform the functions recited by the aforementioned means. As described *supra,* the processing system 1714 may include the TX Processor 668, the RX Processor 656, and the controller/processor 659. As such, in one configuration, the aforementioned means may be the TX Processor 668, the RX Processor 656, and the controller/processor 659 configured to perform the functions recited by the aforementioned means.

## Claims

1. A method by a base station, the method comprising:
determining (902) whether one or more criteria for triggering common reference signal interference cancellation, CRS-IC, are satisfied, wherein the one or more criteria are associated with one or more UE-specific conditions and include at least one of:
a traffic type,
a Connected Discontinuous Reception, CDRX, condition, or
a power preference indicator, PPI, condition, and
if the one or more criteria are satisfied, transmitting (904) a signal to a user equipment, UE, to control triggering of CRS-IC at the UE.

2. The method of claim 1, wherein the transmitted signal is an information element, IE, to cause triggering of CRS-IC at the UE.

3. The method of claim 2, wherein the IE is transmitted without time-division restricted measurements being configured for Radio Resource Management/Radio Link Monitoring/Channel State Information, RRM/RLM/CSI, to optionally trigger the CRS-IC at the UE.

4. The method of claim 1, wherein, if the traffic type indicates that the UE is served with voice traffic or background-type traffic, the base station refrains from transmitting to the UE the signal that triggers the CRS-IC.

5. The method of claim 1, wherein if the CDRX condition indicates that CDRX is enabled in the UE, the base station refrains from transmitting to the UE the signal that triggers the CRS-IC.

6. The method of claim 1, wherein if the CDRX condition indicates a CDRX configuration, the base station determines to refrain from transmitting to the UE the signal that triggers the CRS-IC based on the CDRX configuration.

7. The method of claim 1, wherein if the PPI indicates that the UE signals low power preference to the base station, the base station refrains from transmitting to the UE the signal that triggers the CRS-IC.

8. The method of claim 1, wherein according to the RF condition, if one of first and second conditions is satisfied, the base station refrains from transmitting to the UE the signal that triggers the CRS-IC, and
wherein the first condition is that a reference signal received power, RSRP, of a serving cell is greater than a first threshold, and
the second condition is that an RSRP of a neighbor cell is less than a second threshold.

9. The method of claim 1, wherein according to the RF condition, if a difference between an RSRP of a serving cell and an RSRP of a neighbor cell is greater than a third threshold, the base station refrains from transmitting to the UE the signal that triggers the CRS-IC.

10. The method of claim 1, wherein according to the RF condition, if one of third and fourth conditions is satisfied, the base station refrains from transmitting to the UE the signal that triggers the CRS-IC, and
wherein the third condition is that a received energy from a serving cell per total interference is greater than a fourth threshold, and
the fourth condition is that the received energy from the serving cell per background noise power spectral density is less than a fifth threshold.

11. The method of claim 1, wherein according to the RF condition, if one of fifth and sixth conditions is satisfied, the base station refrains from transmitting to the UE the signal that triggers the CRS-IC, and
wherein the fifth condition is that a received energy from a neighbor cell per total interference is greater than a sixth threshold, and
the sixth condition is that the received energy from the neighbor cell per background noise power spectral density is less than a seventh threshold.

12. The method of claim 1, wherein if the one or more criteria are satisfied to deactivate the CRS-IC that has been previously triggered at the UE, the base station transmits the signal to the UE to deactivate the CRS-IC.

13. The method of claim 12, wherein the one or more criteria include a UE preference received from the UE, the preference regarding the CRS-IC, and
if the one or more criteria are satisfied, the signal is transmitted to the UE to deactivate the CRS-IC, and
wherein the UE preference is associated with a power consumption level of the UE.

14. An apparatus that is a base station, comprising:
means for determining whether one or more criteria for triggering common reference signal interference cancellation, CRS-IC, are satisfied, wherein the one or more criteria are associated with one or more UE-specific conditions and include at least one of:
a traffic type,
a Connected Discontinuous Reception, CDRX, condition, or
a power preference indicator, PPI, condition, and
means for transmitting a signal to a user equipment, UE, to control triggering the CRS-IC at the UE if the one or more criteria are satisfied.

## Patentansprüche

1. Ein Verfahren, das durch eine Basisstation ausgeführt wird, wobei das Verfahren aufweist:
Bestimmen (902), ob ein oder mehrere Kriterien für das Auslösen einer Interferenzunterdrückung in allgemeinen Referenzsignalen (Common Reference Signal Interference Cancellation bzw. CRS-IC) erfüllt werden, wobei das eine oder die mehreren Kriterien mit einer oder mehreren UEspezifischen Bedingungen assoziiert sind und wenigstens eines der folgenden enthalten:
einen Verkehrstyp,
eine Verbundener-Diskontinuierlicher-Empfang (Connected Discontinuous Reception bzw. CDRX)-Bedingung, oder
eine Leistungspräferenzindikator (Power Preference Indicator bzw. PPI)-Bedingung, und
wenn das eine oder die mehreren Kriterien erfüllt werden, Senden (904) eines Signals an ein Benutzergerät (User Equipment bzw. UE) für das Steuern des Auslösens der CRS-IC an dem UE.

2. Verfahren nach Anspruch 1, wobei das gesendete Signal ein Informationselement (IE) ist, das ein Auslösen der CRS-IC an dem UE veranlasst.

3. Verfahren nach Anspruch 2, wobei das IE gesendet wird, ohne dass Zeitteilungs-beschränkte Messungen für Funkressourcenverwaltung/Funkverbindungsüberwachung/Kanalzustandsinformationen (Radio Ressource Management/Radio Link Monitoring/Channel State Information bzw. RRM/RLM/CSI) für ein optionales Auslösen der CRS-IC an dem UE konfiguriert sind.

4. Verfahren nach Anspruch 1, wobei, wenn der Verkehrstyp angibt, dass das UE mit Sprachverkehr oder Hintergrundverkehr bedient wird, die Basisstation das die CRS-IC auslösende Signal nicht an das UE sendet.

5. Verfahren nach Anspruch 1, wobei, wenn die CDRX-Bedingung angibt, dass der CDRX in dem UE aktiviert ist, die Basisstation das die CRS-IC auslösende Signal nicht an das UE sendet.

6. Verfahren nach Anspruch 1, wobei, wenn die CDRX-Bedingung eine CDRX-Konfiguration angibt, die Basisstation basierend auf der CDRX-Konfiguration bestimmt, das die CRS-IC auslösende Signal nicht an das UE zu senden.

7. Verfahren nach Anspruch 1, wobei, wenn der PPI angibt, dass das UE eine Niederleistungspräferenz an die Basisstation signalisiert, die Basisstation das die CRS-IC auslösende Signal nicht an das UE sendet.

8. Verfahren nach Anspruch 1, wobei gemäß der HF-Bedingung, wenn die ersten und zweiten Bedingungen erfüllt werden, die Basisstation das die CRS-IC auslösende Signal nicht an das UE sendet, und
wobei die erste Bedingung vorsieht, dass eine Referenzsignal-Empfangsleistung (RSRP) einer dienenden Zelle größer als ein erster Schwellwert ist, und
die zweite Bedingung vorsieht, dass eine RSRP einer benachbarten Zelle kleiner als ein zweiter Schwellwert ist.

9. Verfahren nach Anspruch 1, wobei gemäß der HF-Bedingung, wenn die Differenz zwischen einer RSRP einer dienenden Zelle und einer RSRP einer benachbarten Zelle größer als ein dritter Schwellwert ist, die Basisstation das die CRS-IC auslösende Signal nicht an das UE sendet.

10. Verfahren nach Anspruch 1, wobei gemäß der HF-Bedingung, wenn eine von dritten und vierten Bedingungen erfüllt wird, die Basisstation das die CRS-IC auslösende Signal nicht an das UE sendet,
wobei die dritte Bedingung vorsieht, dass eine empfangene Energie von einer dienenden Zelle pro gesamte Interferenz größer als ein vierter Schwellwert ist, und
die vierte Bedingung vorsieht, dass die empfangene Energie von der dienenden Zelle pro Hintergrundrauschleistung-Spektraldichte kleiner als ein fünfter Schwellwert ist.

11. Verfahren nach Anspruch 1, wobei gemäß der HF-Bedingung, wenn eine von fünften und sechsten Bedingungen erfüllt wird, die Basisstation das die CRS-IC auslösende Signal nicht an das UE sendet,
wobei die fünfte Bedingung vorsieht, dass eine empfangene Energie von einer benachbarten Zelle pro gesamte Interferenz größer als ein sechster Schwellwert ist, und
die sechste Bedingung vorsieht, dass die empfangene Energie von der benachbarten Zelle pro Hintergrundrauschleistung-Spektraldichte kleiner als ein siebter Schwellwert ist.

12. Verfahren nach Anspruch 1, wobei, wenn das eine oder die mehreren Kriterien erfüllt werden, um die zuvor an dem UE ausgelöste CRS-IC zu deaktivieren, die Basisstation das Signal an das UE für das Deaktivieren der CRS-IC sendet.

13. Verfahren nach Anspruch 12, wobei das eine oder die mehreren Kriterien eine von dem UE empfangene UE-Präferenz enthalten, wobei die Präferenz die CRS-IC betrifft, und
wenn das eine oder die mehreren Kriterien erfüllt werden, das Signal an das UE gesendet wird, um die CRS-IC zu deaktivieren, und
wobei die UE-Präferenz mit einem Stromverbrauchspegel des UE assoziiert ist.

14. Eine Vorrichtung, die eine Basisstation ist, aufweisend:
Mittel zum Bestimmen, ob ein oder mehrere Kriterien für das Auslösen einer Interferenzunterdrückung in allgemeinen Referenzsignalen (Common Reference Signal Interference Cancellation bzw. CRS-IC) erfüllt werden, wobei das eine oder die mehreren Kriterien mit einer oder mehreren UEspezifischen Bedingungen assoziiert sind und wenigstens eines der folgenden enthalten:
einen Verkehrstyp,
eine Verbundener-Diskontinuierlicher-Empfang (Connected Discontinuous Reception bzw. CDRX)-Bedingung, oder
eine Leistungspräferenzindikator (Power Preference Indicator bzw. PPI)-Bedingung, und
Mittel zum Senden eines Signals an ein Benutzergerät (User Equipment bzw. UE) für das Steuern des Auslösens der CRS-IC an dem UE, wenn das eine oder die mehreren Kriterien erfüllt werden.

## Revendications

1. Procédé par une station de base, le procédé comprenant :
une détermination (902) du fait qu'un ou plusieurs critères de déclenchement d'une annulation d'interférence de signal de référence commun, CRS-IC, sont satisfaits, dans lequel les un ou plusieurs critères sont associés à une ou plusieurs conditions spécifiques à un UE et incluent au moins un :
d'un type de trafic,
d'une condition de réception discontinue connectée, CDRX, ou
d'une condition d'indicateur de préférence de puissance, PPI, et
si les un ou plusieurs critères sont satisfaits, une transmission (904) d'un signal vers un équipement d'utilisateur, UE, pour une commande d'un déclenchement de CRS-IC au niveau de l'UE.

2. Procédé selon la revendication 1, dans lequel le signal transmis est un élément d'information, IE, pour provoquer un déclenchement d'une CRS-IC au niveau de l'UE.

3. Procédé selon la revendication 2, dans lequel l'IE est transmis sans mesures restreintes par répartition dans le temps étant configurées pour une gestion de ressources radio/un suivi de liaison radio/des informations d'état de canal, RRM/RLM/CSI, pour éventuellement déclencher la CRS-IC au niveau de l'UE.

4. Procédé selon la revendication 1, dans lequel, si le type de trafic indique que l'UE est desservi avec un trafic vocal ou un trafic de type d'arrière-plan, la station de base s'abstient de transmettre vers l'UE le signal qui déclenche la CRS-IC.

5. Procédé selon la revendication 1, dans lequel si la condition CDRX indique qu'une CDRX est autorisée dans l'UE, la station de base s'abstient de transmettre vers l'UE le signal qui déclenche la CRS-IC.

6. Procédé selon la revendication 1, dans lequel si la condition CDRX indique une configuration CDRX, la station de base détermine le fait de s'abstenir de transmettre vers l'UE le signal qui déclenche la CRS-IC sur la base de la configuration CDRX.

7. Procédé selon la revendication 1, dans lequel si le PPI indique que l'UE signale une préférence de puissance faible à la station de base, la station de base s'abstient de transmettre vers l'UE le signal qui déclenche la CRS-IC.

8. Procédé selon la revendication 1, dans lequel selon la condition RF, si une des première et deuxième conditions est satisfaite, la station de base s'abstient de transmettre vers l'UE le signal qui déclenche la CRS-IC, et
dans lequel la première condition est qu'une puissance reçue de signal de référence, RSRP, d'une cellule de desserte est supérieure à un premier seuil, et
la deuxième condition est qu'une RSRP d'une cellule voisine est inférieure à un deuxième seuil.

9. Procédé selon la revendication 1, dans lequel selon la condition RF, si une différence entre une RSRP d'une cellule de desserte et une RSRP d'une cellule voisine est supérieure à un troisième seuil, la station de base s'abstient de transmettre vers l'UE le signal qui déclenche la CRS-IC.

10. Procédé selon la revendication 1, dans lequel selon la condition RF, si une des troisième et quatrième conditions est satisfaite, la station de base s'abstient de transmettre vers l'UE le signal qui déclenche la CRS-IC, et
dans lequel la troisième condition est qu'une énergie reçue à partir d'une cellule de desserte par interférence totale est supérieure à un quatrième seuil, et
la quatrième condition est que l'énergie reçue à partir de la cellule de desserte par densité spectrale de puissance de bruit d'arrière-plan est inférieure à un cinquième seuil.

11. Procédé selon la revendication 1, dans lequel selon la condition RF, si une de cinquième et sixième conditions est satisfaite, la station de base s'abstient de transmettre vers l'UE le signal qui déclenche la CRS-IC, et
dans lequel la cinquième condition est qu'une énergie reçue à partir d'une cellule voisine par interférence totale est supérieure à un sixième seuil, et
la sixième condition est que l'énergie reçue à partir de la cellule voisine par densité spectrale de puissance de bruit d'arrière-plan est inférieure à un septième seuil.

12. Procédé selon la revendication 1, dans lequel si les un ou plusieurs critères sont satisfaits pour désactiver la CRS-IC qui a été précédemment déclenchée au niveau de l'UE, la station de base transmet le signal vers l'UE pour désactiver la CRS-IC.

13. Procédé selon la revendication 12, dans lequel les un ou plusieurs critères incluent une préférence d'UE reçue à partir de l'UE, la préférence concernant la CRS-IC, et
si les un ou plusieurs critères sont satisfaits, le signal est transmis vers l'UE pour désactiver la CRS-IC, et
dans lequel la préférence d'UE est associée à un niveau de consommation de puissance de l'UE.

14. Appareil qui est une station de base, comprenant :
un moyen de détermination du fait qu'un ou plusieurs critères de déclenchement d'une annulation d'interférence de signal de référence commun, CRS-IC, sont satisfaits, dans lequel les un ou plusieurs critères sont associés à une ou plusieurs conditions spécifiques à un UE et incluent au moins un :
d'un type de trafic,
d'une condition de réception discontinue connectée, CDRX, ou
d'une condition d'indicateur de préférence de puissance, PPI, et
un moyen de transmission d'un signal vers un équipement d'utilisateur, UE, pour une commande d'un déclenchement de CRS-IC au niveau de l'UE, si les un ou plusieurs critères sont satisfaits.
